# EUROPÄISCHE PATENTSCHRIFT

(11) **EP 2 751 456 B1**
(45) Veröffentlichungstag und Bekanntmachung des Hinweises auf die Patenterteilung: **27.01.2021**
(21) Anmeldenummer: 12756437.5
(22) Anmeldetag: 03.09.2012
(51) Int. Cl.: F16K 17/04, F16K 17/40, F16K 49/00

(54) **ROHRLEITUNG MIT ÜBERDRUCKVENTIL**
PIPE WITH EXCESS PRESSURE VALVE
CONDUITE DOTÉE D'UN CLAPET DE DÉCHARGE

(30) Priorität: 02.09.2011 EP 11179880; 21.10.2011 EP 11186081
(43) Veröffentlichungstag der Anmeldung: 09.07.2014
(73) Patentinhaber: Aurotec GmbH, 4844 Regau (AT)
(72) Erfinder: ZIKELI, Stefan, A-4844 Regau (AT); ECKER, Friedrich, A-4850 Timelkam (AT)
(74) Vertreter: Sonn & Partner Patentanwälte
(86) Internationale Anmeldenummer: PCT/EP2012/067074
(87) Internationale Veröffentlichungsnummer: WO 2013/030397

(56) Entgegenhaltungen:
- JP-A- 2003 093 536
- JP-A- 2007 232 178
- US-A- 5 297 575
- US-A- 5 623 962
- US-A1- 2009 269 639
- US-B1- 6 425 410

## Beschreibung

Die Erfindung betrifft eine Vorrichtung und Verfahren zum Transportieren viskoser und thermisch sensitiver Fluide durch eine Leitung.

Die Verwendung von Druckentlastungsvorrichtungen ist allgemein bekannt. Übliche Mittel umfassen beispielsweise Ventile oder Berstscheiben. Überdruckventile schützen druckbeaufschlagte Räume oder Druckbehälter vor einem unzulässigen Druckanstieg, der zu einer Schädigung des angeschlossenen Druckgerätes führen kann. Ventile leiten bei Überschreiten des Ansprechdruckes Gase, Dämpfe oder Flüssigkeiten in die Atmosphäre oder in Sammelrohrleitungen ab. Berstscheiben weisen eine Membran auf, die unter Wirkung eines Drucks, der höher ist als der normale Betriebsdruck, aber geringer ist als der Druck, bei dem ein Rohr oder Gefäß selbst bricht, bersten, wodurch eine Druckentlastung mit einem Außenraum ermöglicht wird.

Druckentlastungsvorrichtungen führen unter zuvor genannten Bedingungen zu einer lokalen Verminderung des Systemdruckes. Druckentlastungseinrichtungen können bedingt durch die Geometrie von z.B. Rohren oder Kanälen nur bedingt angebracht werden.

Berstscheiben als Druckentlastungseinrichtung weisen darüber hinaus selbst Konstruktions- und Fertigungseinschränkungen auf. So können Berstscheiben nicht beliebig dünn oder dick gestaltet werden um als Vorrichtung zur genauen Überdruck- oder Unterdruckabsicherung beitragen zu können. Es muss somit der Ansprechdruck genügend hoch bei Überdruck oder gering bei Unterdruck sein. Einrichtungen zur Druckentlastung lassen sich daher nach ihren Anwendungsmöglichkeiten einteilen und müssen immer mit Bezug auf das abzusichernde Gesamtsystem fokussiert sein, können daher aus wiederverwendbaren, nicht wieder verwendbaren Bestandteilen sowie aus Sonderbauteilen bestehen, sodass die Auswahl viele Kriterien berücksichtigen muss. Neben dem Kriterium Druck, Unterdruck, Einbauort der Druckentlastungseinrichtung muss auch das physikalisch chemische Verhalten, wie gegebenenfalls Korrosion oder Abrasion sowie das Trägheitssystem der Druckentlastung berücksichtigt werden. Für manche Prozesse werden auch totraumfreie Druckentlastungssysteme gesucht da Reaktionsprodukte mit längeren Verweilzeiten bedingt durch Totzonen die Qualität der erzeugten Produkte wesentlich negativ beeinflussen können. Gerade im Pharmabereich werden Apparaturen und Maschinen, welche keine Totzonen im Anlagensystem tolerieren, benötigt.

Die EP 789 822 betrifft eine Drucksicherheitsvorrichtung für thermisch instabile viskose Massen, wie Cellulose, Wasser, NMMO (N-Methylmorpholin-N-oxid) Lösungen, in der ein Berstelement in den Innenraum eines Transportrohres einragt.

Überdruckventile sind beispielsweise aus der US 4,724,857, der US 5,067,511, der US 5,577,523 bekannt. Diese Ventile sind Armaturen, welche an Druckbehältern zur Sicherung angeschraubt werden können um entsprechende Sicherungsvorrichtungen für unerwünschte Drücke bereitzustellen.

So beschreibt die US 4,724,857 einen Ventilkörper, welcher über Gewindeanschlüsse an ein Anlagensystem zur Druckentlastung angeschlossen werden kann. Der Nachteil dieser Druckentlastung ist, dass es innerhalb des Ventilkörpers und vor dem Druckentlastungsventilkörper zu einem Stauraum beziehungsweise Totraum und zu keiner Durchströmung des Raumes kommt. Somit können sich sogenannte "Totwasserzonen" ausbilden, die einerseits den Ventilkörper verblocken können, anderseits dadurch die Druckentlastung beeinträchtigen können.

In der US Patentschrift 5,067,511 wird gelehrt, dass der zur Druckentlastung notwendige Ventilkörper an einem Knickstab befestigt ist, jedoch der für die Druckentlastung vorgesehene Ventilkörper soweit im Ventilgehäuse zurückgezogen ist, dass sich ausgeprägte Totwasserzonen bilden können.

In der US 5,577,523 wird eine Armatur dargestellt, die durch stufenweises Öffnen nicht den Rohrquerschnitt freigibt. Auch hier ist erkennbar, dass sich das Medium vor dem Ventilkörper anstaut und eine Totwasserzone gebildet wird. Beim Transport von viskosen und thermisch instabiler bzw. thermisch sensitiver Massen, insbesondere solchen welche nur durch Erwärmen flüssig gehalten werden und bei Abkühlung zum Verklumpen neigen oder zu Ablagerungen führen, war es ein Ziel, z.B. der EP 789 822 und der US 5,337,776, von einer Rohrleitung zurückversetzte Räume, in denen sich diese Massen ablagern können zu vermeiden. Dieses Ziel wir auch in der EP 789 822 verfolgt.

JP 2003 093536 A (Zusammenfassung) betrifft Vorrichtung mit einem geschlossenen Mediations-Hohlraum für eine Löschpumpe ohne eine Abflussleitung.

US 6,425,410 B1 zeigt ein Absperrventil einer Leitung, worin eine verschließbare Absperrscheibe mit einem Knickstab verbunden ist. Die Leitung ist bei Normalbetrieb geschlossen und wird bei Druck gegen den Bolzen geöffnet, wobei der Druck über den oberen Teil der Absperrscheibe vermittelt wird.

US 5,297,575 A beschreibt ein ähnliches Absperrventil wie in US 6,425,410 B1 gezeigt. Anstelle einer Absperrscheibe wird darin ein Kolben verwendet.

JP 2007 232178 A (Zusammenfassung) beschreibt ein Gerät für einen Löschschlauch mit einer Berstscheibe. Die Berstscheibe wird nicht durch ein durch eine Rohrleitung gepumptes Fluid gespült. Weiters ist die Berstscheibe kein verschiebbares Abdichtelement sondern ein Element, welches unter Druck aufbricht und dadurch eine Öffnung bildet.

In der US 5, 337, 776 wird gelehrt dass die Berstscheibe, eingebaut in eine Rohrleitung, so ausgeführt sein soll, dass die Berstmembran bündig in der Wand der Rohrleitung sitzt. Zu diesem Zweck muss die Rohrleitung nach US 5,337,776 derart konstruiert und gebaut sein, dass das durchgehende Masserohr, sowie der Thermostatmantel des Rohres unterbrochen werden muss und somit in der Rohrleitung eine inhomogene Thermostatisierungzone vorhanden ist. Ein weiterer wesentlicher Nachteil der US 5,337,776 liegt darin, dass die in der Patentschrift beschriebene Berstscheibe notgedrungen auf einen zylindrischen Trägerkörper aufgeschweißt werden muss. Die bündige Fixierung der Berstscheibe im Innenraum eines Rohres oder in der Rohrwand ist aufwändig und erfordert das Anschweißen der Berstscheibe mittels Elektronenstrahlschweißverfahren. Zudem können keine handelsüblichen Berstscheiben verwendet werden. Weiters wird das beabsichtigte Ziel der absoluten Totraumfreiheit nicht erzielt, da die flachen Berstscheiben und deren Fixierungen in den gebogenen Rohrinnenraum ragen und abstromseitig nicht-Fluid umspülte Bereiche zurücklassen.

Ein weiterer wesentlicher Stand der Technik ist durch die US-A-5 623 962 gegeben, welche eine Rohrleitung mit einem seitlichen Ventil mit einem Abdichtelement mit einer Scheibe und einem Gestänge, das durch eine Feder in Schließposition gehalten wird, betrifft.

Es ist ein Ziel der vorliegenden Erfindung alternative Druckentlastungsvorrichtungen bereitzustellen, welche die Nachteile der bisherigen Vorrichtungen beseitigen.

Druckentlastungsvorrichtungen können massive Auswirkungen auf die Produktqualität von unter Druck gesetzten Medien in Reaktionsgefäßen ausüben, da auch geringfügige, z.B. durch Totzonen gebildete Unterschiede in den Medien zu Produktänderungen führen können. Beispielsweise können sich gelöste Zellulose-Polymermassen extrem verfärben, wenn es zu Absetzungen oder Anstauungen kommt. In Transportleitungen von derartigen sensiblen Polymeren muss, in allen Anlagenabschnitten auf die gleichen thermischen Bedingungen und zeitliche Verläufe (Verweilzeit) geachtet werden. Unterschiede können durch unzulängliche Innengeometrien von Druckentlastungsvorrichtungen hervorgerufen werden, in denen sich in bestimmten Bereich Produktanhäufungen bilden können. Bedingt durch diese unkontrollierten Produktanhäufungen und den daraus resultierenden Qualitätseinbußen der Polymerlösung können Produktionsausfälle an den Verarbeitungsmaschinen die Folge sein. Daher müssen in solchen kritischen Gesamtanlagen und Anlagenteilen spezielle Druckentlastungsvorrichtungen eingesetzt werden.

Die Erfindung liefert eine Rohrleitung zum Transport eines viskosen Fluids entsprechend den in Anspruch 1 definierten Merkmalen.

Die Rohrleitung kann als Verbindungsstück ("Fitting") zum Verbinden von Rohrleitungen oder anderen Leitungselementen, wie Wärmetauschern, ausgeführt sein. Im Inneren der Rohrleitung kann ein Mischelement vorgesehen sein, welches einen Fluidstrom im Bereich des Überdruckventils durchmischt. Die erfindungsgemäße Rohrleitung bzw. der erfindungsgemäße Rohrleitungsteil wird vorzugsweise in eine Wärmetauscherleitung eingebaut, worin ein Fluid temperiert transportiert wird. Der Transport wird insbesondere durch einen erhöhten Druck im Bereich von 1 bis 250 bar bewerkstelligt, wobei das erfindungsgemäße Überdruckventil als Überdruckentlastung dient, sobald der Druck ein kritisches Ausmaß übersteigt. Das Überdruckventil wird so gewählt, damit sie bei normalem Betriebsdruck die Abflussleitung vom Inneren der Rohrleitung, in dem das Fluid transportiert wird, trennt und bei einem gewählten Druck die Abflussleitung freigibt, sodass Fluid entweichen kann. Die gegenständliche Erfindung wird weiter durch die Ansprüche beschrieben.

Gemäß der Erfindung wird das Abdichtelement des Ventils nicht direkt an der Rohrwand befestigt, sondern die druckfeste Befestigung, welche bei dem vorbestimmten Druck die Öffnung bewirkt, wird durch eine Halterung, das Gestänge bewirkt, welches an dem Abdichtelement und dem Ventil-Mantel befestigt ist. Diese Befestigung kann lösbar oder nicht-lösbar sein. Das Abdichtelement kann mit der Ventilwand durch eine Dichtung abgedichtet sein. Durch exakte formschlüssige Ausführung kann auch auf eine Dichtung verzichtet werden.

Bei nicht-lösbaren Befestigungen bewirkt das Gestänge selbst die Verschiebung bei Überdruck, insbesondere durch eine Verformung des Gestänges. Derartige Ausführungen sind beispielsweise Knicke oder Biegungen des Gestänges. Vorzugsweise ist das Gestänge ein Knickstab, welcher bei Überdruck einen Euler'sche Knick oder Biegeverformung unter dem vorbestimmten Überdruck erfährt. Das Gestänge kann in der Halterung auch gelenkig befestigt sein.

Lösbare Befestigungen des Gestänges können an einer Halterung am Ventil vorgenommen werden, wobei bei dem vorbestimmten Überdruck das Gestänge von der Halterung gelöst wird. Lösbare Befestigungen können beispielsweise über Scher-Verbindungen oder über Sollbruchstellen bewerkstelligt werden. Durch Scher-Verbindungen wird bei Betriebsdruck das Gestänge durch den Reibungswiderstand bzw. Scherwiderstand des Scherelements fixiert, welcher bei dem vorbestimmten Überdruck überwunden wird, wodurch das Gestänge verschiebbar bzw. beweglich wird. Bei Sollbruchstellen ist das Gestänge an der Halterung befestigt, wobei diese Befestigung bei dem vorbestimmten Überdruck bricht und das Gestänge verschiebbar bzw. beweglich wird. Die Versicherbarkeit bzw. Bewegung des Gestänges kann in der Halterung als Führung erfolgen. Die lösbare Befestigung kann weiters durch ein Verschiebungswiderstandselement erfolgen. Bei Normaldruck verhindert dieser Widerstand eine Verschiebung des Gestänges bzw. des Abdichtelements und bei dem vorbestimmten Überdruck wird der Verschiebungswiderstand überwunden und das Gestänge verschoben bzw. bewegt, z.B. in der Halterung als Führungselement. Solche Widerstandselemente sind beispielsweise Federn. Das Verschiebungswiderstandselement ist ein zusätzliches Element neben der Halterung und ist nicht die Halterung selbst, welche z.B. ebenfalls für andere lösbare Befestigungen verwendet werden kann. Es ist ebenso möglich Kombinationen der hier beschriebenen nicht-lösbaren und lösbaren Befestigungen vorzusehen, z.B. ein verformbares Gestänge, welches zusätzlich lösbar in einer Halterung befestigt ist oder Halterungen mit Sollbruchstellen und/oder Scher-Verbindungen zusammen mit zusätzlichen Verschiebungswiderstandselementen wie Federn.

Das Gestänge kann jede zur Verschiebung oder Verbiegung geeignete Form aufweisen. Im Querschnitt kann es rund, kreisförmig, quadratisch, rechteckig, länglich, vieleckig, insbesondere 5-, 6- 7,- oder 8-eckig geformt sein. In der Längsachse kann es gleichmäßig dimensioniert oder aber auch verengend oder erweiternd, z.B. kegelförmig geformt sein. Es ist insbesondere vorteilhaft, wenn das Gestänge, nachdem es aus der Betriebsposition oder -form verschoben oder bewegt wurde, es leichter, z.B. durch geringeren Druck, weiter verschiebbar oder bewegbar wird. Bei einem Überdruckventil wird bei Erreichen des Überdrucks zuerst das Abdichtelement geringfügig verschoben, sodass ein Fluidaustritt ermöglicht wird. Der Druck sinkt dadurch ab. Es ist sinnvoll, dass ein auch bei einem Absinkenden Druck das Überdruckventil nach erstmaligem Erreichen des vorbestimmten Überdrucks sich weiter öffnen lässt. Daher ist vorzugsweise das Gestänge derart fixiert, sodass es nach Erreichen des vorbestimmten Überdrucks bei geringeren Drücken verschiebbar bleibt. Dies kann beispielsweise durch unterschiedliche Dimensionierungen des Gestänges geschehen. So ist es möglich den Durchmesser des Gestänges zwischen der Halterung und dem Abdichtelement geringer zu wählen als den Durchmesser des Gestänges in der Halterung. Nachdem durch den vorbestimmten Überdruck dieser Teil des Gestänges in der Halterung aus der Halterung verschoben wurde (z.B. durch Überwinden des Scherwiderstandes) bleibt das Gestänge frei oder leichter beweglich, da der Teil mit dem geringeren Durchmesser keinen Scherwiderstand in der Halterung bewirkt. Das Abdichtelement kann daher für eine großflächige Öffnung weiter verschoben werden. Bei verformbaren Gestängen, wie Knickstäben, wird nachdem das Gestänge eine erste Verformung erfährt, z.B. eine ansatzweise Biegung, eine weitere Verformung oder Biegung, unter Umständen bis zur maximalen Verformung oder Knickung, leichter.

Die erfindungsgemäßen Abdichtelemente sind nicht direkt mit der Rohrleitungswand verbunden um die Druckfestigkeit bis zum vorbestimmten Überdruck zu halten. Dies wird durch das Gestänge bewerkstelligt. Dadurch ergeben sich einige Vorteile gegenüber anderen Überdruckentlastungsvorrichtungen basierend auf direkt befestigten Berstscheiben, z.B. wie in der US 5,337,776 beschrieben.

Die dem Innenraum der Rohrleitung zugewandte Fläche des Abdichtelements wird im Betrieb von einem Strom des viskosen Fluids durch die Rohrleitung umspült. Dies ist eine Notwendigkeit beim Transport von instabilen viskosen Fluiden, insbesondere von thermisch instabilen Fluiden, welche bei Temperaturschwankungen sich verfestigen oder gar reaktiv bis hin zu explosiv werden können. Es ist daher notwendig Ablagerungen, wie sie beispielsweise in Toträumen entstehen können und bei Ventilarmaturen vorkommen, zu vermeiden. Daher wird erfindungsgemäß das Abdichtelement unmittelbar an der Rohrinnenwand vorgesehen, sodass es vom Fluid umspült wird.

Erfindungsgemäss liegt die dem Innenraum der Rohrleitung zugewandte Fläche des Abdichtelements mit der Innenseite der Rohrwand bündig vor. Dadurch werden Ecken und Kanten an den Übergangsbereichen zwischen Rohrinnenwand und dem Abdichtelement vermieden, um Ablagerungen des Fluids zu unterbinden.

Ein besonderer Vorteil der erfindungsgemäßen Rohrleitung ist, dass die dem Innenraum der Rohrleitung zugewandte Fläche des Abdichtelements konform zur Kontur der Innenseite der Rohrwand geformt ist. Die Kontur der Fläche des Abdichtelements ist ununterscheidbar von der Kontur der Rohrinnenwand, wodurch auch im Abstrombereich nach dem Abdichtelement keine strömungsfreien Bereiche entstehen. Ein wesentlicher Nachteil von Berstscheiben war, dass diese bzw. deren Umfangsbereich, welcher an der Rohrinnenwand angeschweißt werden musste, immer flächig geformt werden mussten und keine komplette Formanpassung an die (gekrümmte) Rohrinnenwand möglich war. Eine flache Berstscheibe führte in runden Rohrleitungen immer zu Einragungen (oder bei nicht-bündiger Ausgestaltung zu abgesetzten Toträumen) in der Rohrleitung wodurch schlecht umspülte Bereiche hinter dem Berstelement entstanden. Die erfindungsgemäßen Ventile und Abdichtelemente können erfindungsgemäß exakt an die Kontur der Rohrleitung angepasst werden womit diese Nachteile überwunden werden könnten.

Ein weiterer Nachteil der Berstscheiben ist, dass diese relativ rasch an Materialermüdung leiden. Daher müssen Berstscheiben einer regelmäßigen Kontrolle unterzogen und vorsichtshalber in bestimmten Wartungszyklen ersetzt werden.

Arbeitsdruck von Berstscheiben bzw. Öffnungsdruck ist nicht exakt und genau durch die Herstellung bestimmbar. Außerdem sind die Berstscheiben immer dem Fluid ausgesetzt, sodass es in Folge von allfälligen Korrosionen zur Beeinflussung der Materialgüte der Berstmembran kommt. Die Installation von Bertscheiben gestaltet sich schwierig, sodass lange Wartungszeiten bzw. Stillstände beim Austausch auftreten.

Erfindungsgemäß wird das Kontaktelement zum Innenraum der Rohrleitung, das Abdichtelement nicht als Überdruckregulator eingesetzt. Diese Funktion erfüllt das Gestänge, bzw. dessen Halterung, welches nicht dem Rohrinnenraum ausgesetzt wird. Dadurch tritt geringe Materialermüdung und Korrosion der sensiblen Teile auf. Zudem ist der Ersatz von diesen Teilen, welche nicht durch Fluidkontakt verunreinigt oder in Mittleidenschaft gezogen wurden wesentlich einfacher.

Diese Vorteile sind allen erfindungsgemäßen Ausführungsformen gemein. Gemäß der Erfindung wird eine Rohrleitung zum Transport eines viskosen Fluids mit einem Überdruckventil mit einem Abdichtelement, welches das Innere der Rohrleitung von einer Abflussleitung trennt, zur Verfügung gestellt und welches eingerichtet ist, bei einem vorgegebenen Überdruck die Abflussleitung freizugeben, wobei des Abdichtelement der Rohrleitung mit einer Fläche in der mit dem Fluid durchströmten Rohrleitung angeordnet ist, wobei die Fläche im Betrieb vom viskosen Fluid in der Rohrleitung umspült wird, und wobei das Abdichtelement durch ein Gestänge in Schließposition fixiert wird, welches Gestänge durch den vorgegebenen Überdruck verschiebbar ist oder verschoben wird, sodass das damit verbundene Abdichtelement die Abflussleitung freigibt.

Vorzugsweise werden verformbare Gestänge, z.B. Knickstäbe, verwendet, welche gegenüber den anderen Ausführungsformen weitere Vorteile aufweisen.

Das Abdichtelement kann über ein Gestänge mit einem in horizontaler Position befindlichen Scherstift verbunden sein oder das Gestänge kann selbst in einer Halterung über eine Scherverbindung lösbar befestigt sein. Wird der vorbestimmte Überdruck erreicht bzw. überschritten, so wird das Abdichtelement unter Druck gesetzt, der Druck pflanzt sich im Ventil über das Gestänge fort und schert den Stift ab, wodurch das Gestänge mit dem Abdichtelement in eine offene Position versetzt wird und die Abflussleitung freigegeben wird.

Nachteilig bei den mit Scherstift oder Scherhalterung ausgerüsteten Überdruckventilen ist, dass Pulsationen im Druck in der Rohrleitung auf das Abdichtelement drücken und den Scherstift oder die Befestigung des Gestänges beschädigen können. Dieser Nachteil tritt bei Knickstäben nicht auf, welche nicht-lösbar fix befestigt sind.

Eine weitere Möglichkeit zur Steuerung der Überdruckregelung sind federbelastende Abdichtelemente. Ein Problem von Federn ist das "re-seating", sowie die Genauigkeit der Einstellung des vorbestimmten Überdrucks. Die Entlastung beginnt in der Regel schon bei 90% des eingestellten Drucks. Auch federbelastete Ventile müssen mindestens einmal jährlich neu zertifiziert werden. Bei geringen Überdrücken ist die Genauigkeit ungenügend und die Zuverlässigkeit über 200 bar begrenzt.

Im Gegensatz dazu weist das eine Überdruckventil mit verformbarem Gestänge, hierin auch als "Knickstab" bezeichnet, sehr geringe Toleranzen auf. Die Drucktoleranz beträgt 3 bis 5%, sodass ein Knickstab-Ventil in einem Bereich von 95 bis 97 % vom ausgelegten Ansprechdruck arbeiten kann.

Die Knickstab Überdruckentlastung beruht auf einem Gestänge, welches im Überdruckfall in Form einer axialen Kraft geknickt wird und durch die Verformung das Abdichtelement verschiebt und so die Abflussleitung freigibt. Die Dimensionierung kann gemäß dem Euler-Gesetz, beziehungsweise an Hand der Euler'schen Knickfälle (Biegeknicken), durchgeführt werden. Die mittig auf das Abdichtelement und das Gestänge wirkende Druckkraft (= Sicherheitsdruck) wird über den geometrischen Bezug des Knickstabes sowie der mechanischen und werkstoffseitigen Parameter des belasteten Überdruckventils zur Dimensionierung des Knickstabes herangezogen.

Durch die Verformung verliert der Knickstab so viel an Stabilität bis er schlagartig unter Einwirkung der Druckkraft, deren Wirklinie in der Achse des Gestänges liegt, in eine gekrümmte Stellung geht und somit die Überdrucköffnung bzw. das am Gestänge angebrachte Abdichtelement in eine verschobene Position zurückgedrängt wird und die Abflussleitung freigibt. Der Verlust der Formstabilität des Gestänges äußert sich in einer mit der Belastung rasch wachsenden Formänderungen des Gestänges - und zwar ab einer bestimmten vorgegebenen Belastung, der Knicklast, die dem vorbestimmten Überdruck entspricht, mit einem seitlichen Ausknicken aus der Knickstabachse. Die Knickung erfolgt in wenigen Millisekunden.

Die "Ansprechknickstablast" (beim Auslösedruck) ist abhängig von der Art der Beanspruchung durch die auf den Knickstab wirkenden Druckkräfte über die Stablänge. Die Querschnittsform des Knickstabes wirkt sich ebenso auf die Dimensionierung des Knickstabes aus sowie auch die über die Knickstabachse gleichbleibenden oder veränderlichen Flächenträgheitsmomente. Ein wesentlicher Einflussfaktor in der Dimensionierung des Knickstabes sind die Materialeigenschaften des verwendeten Knickstabes (Elastizitätsmodul und Fließgrenze des Knickstabmaterials). Zur Berechnung des Knickstabes ist auch die Art der Einspannung bzw. der Knickstabbelastungsfall zu berücksichtigen.

Ein Vorteil der Knickstäbe ist, dass sie nicht auf Druckpulsationen in der Rohrleitung ansprechen, sodass auch keine Materialermüdung wie bei Berstscheiben stattfinden kann. Die Stabknickung kann exakt bestimmt werden. Es werden Genauigkeits- oder Dimensionierungsabweichungen von 2-5% des Solwertes (Überdruck) erreicht.

Die Knickstäbe sind keinem aggressiven Fluiden ausgesetzt, da sie sich außerhalb des Innenraums der Rohrleitung befinden. Außerdem ist keine Temperatur-Korrektur über die Knickstabauslegung notwendig, da über den Elastizitätsmodul des Knickstabmaterials bei Systemtemperatur dimensioniert wird. Die Öffnung eines Knickstabventils bei Überdruck ist etwa 10 mal schneller als im Vergleich einer Berstscheibe und liegt bei 1,5 bis 2 Millisekunden.

Die Vorteile von Überdruckventilen mit Knickstäben (verformbarem Gestänge) sind: der Knickstab ermüdet nicht; der Knickstab ist nicht mit dem Medium in Kontakt und wird daher nicht von diesem angegriffen; der Knickstab knickt genauer am definierten vorbestimmten Überdruck (= Maximalwert); ein maximaler Betriebsdruck von bis zu 95% vom Sollwert kann erreicht werden; keine Leckage nahe dem Sollwert (klares Öffnen/Schließen ohne teilweise Spaltöffnungen); falsche Montage des Knickstabes schwer möglich, jedoch bei Berstscheibe; Überdruckventil mit Knickstab leicht kontrollierbar oder ersetzbar; eine 100% totraumfreie Abdichtung des Rohrinnenraumes gegenüber der Abflussleitung ist durch exakte Fertigung des Abdichtelements möglich; mit Knickstab ausgerüstete Überdruckventile sind über alle Druckbereiche genau.

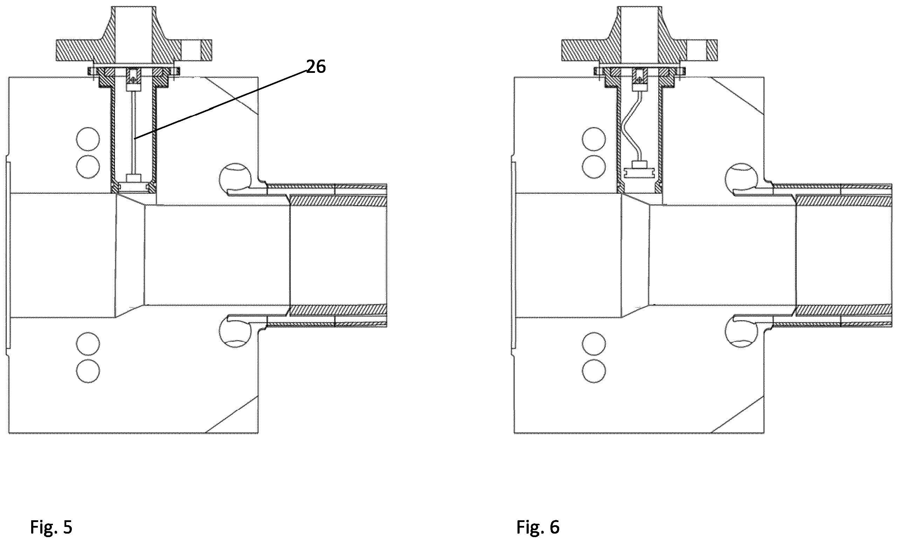

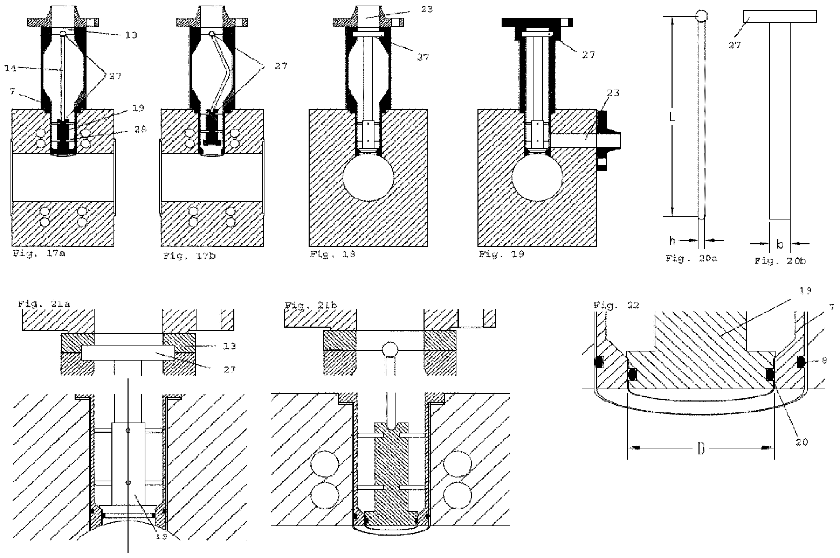

Der Knickstab kann mit der Halterung und/oder dem Abdichtelement eingespannt (d.h. ungelenkig, s. z.B. Fig. 6), gelenkig (s. z.B. Fig. 17b) befestigt werden. Es ist auch möglich ein Ende entweder an der Halterung oder am Abdichtelement frei beweglich zu halten, d.h. dieses Ende kann bei Beanspruchung des Knickstabes seitlich ausscheren. Vorzugsweise werden die Enden des Knickstabes an beiden Enden vor seitlichem Ausscheren gesichert, d.h. entweder eingespannt oder gelenkig fixiert.

Vorzugsweise wird das Gestänge als Knickstab an einem Ende am Abdichtelement und/oder am anderen Ende an einer Halterung des Überdruckventils gelenkig befestigt, sodass eine Abwinkelung am Gelenk während einer Knickbewegung ermöglicht wird.

Die Knickkraft (und damit verbunden der Auslösedruck) hängt von der Art der Fixierung des Knickstabes und seiner Geometrie ab. Allgemein gilt die Euler' sehe Formel: F = π²EI / s², mit F...Knickkraft, π...Kreiszahl Pi, E...Elastizitätsmodul, I...axiales Flächenträgheitsmoment des Querschnitts des Knickstabes und s...Knicklänge. Die Knicklänge s steht mit der Knickstablänge L in folgender Beziehung s = βL, wobei für die Knicklängenbeiwerte β folgendes gilt: β = 2 für einen einseitig eingespannten Knickstab mit einem frei beweglichen Ende, β = 1 für beidseitig gelenkig befestigte Knickstäbe, β = 0,699... für einen einseitig gelenkig und am anderen Ende eingespannten (ungelenkig) Knickstab, β = 0,5 für einen beidseitig eingespannten (ungelenkigen) Knickstab.

Die Form des Knickstabquerschnitts wird durch die Querschnittsbreite (b) und die Knickstabhöhe (h) charakterisiert, wobei unter b die größere Dimension verstanden wird (b ≥ h) . b und h stehen normal zueinander. Im Fall von quadratischen oder kreisförmigen Querschnitten ist b = h (= d, Durchmesser bei kreisförmigen Querschnitten). Bei rechteckigen oder elliptischen Querschnitten ist b > h. Ebenfalls möglich sind vieleckige, inklusive 2-, 4-, 5-, 6-, 7-, 8- oder mehreckige Knickstäbe. Die Knickstäbe können hohl oder massiv sein (allesamt Geometrien, die auch für starre Gestänge in den oben beschriebenen Ausführungsformen mit z.B. Feder- oder Scherhalterung wählbar sind). Für beliebige Querschnittsgeometrien kennzeichnet b die breiteste Seite und h die darauf stehende normale Höhe.

Unter Einbeziehung der vorgenannten, dem Fachmann bekannten, Eulerschen Formelbezüge (F = π²EI / s² und s = βL) für elastisches Knicken kann bei vorgegebenem Auslösedruck p [bar] und bekanntem Entlastungsdurchmesser des Abdichtelements D [mm] unter Einbeziehung der Einspannsituation des Knickstabs (β), sowie des Elastizitätsmoduls des Knickstabwerkstoffs E [N/mm²] die Knickstabgeometrie (b...Querschnittsbreite [mm], h...Querschnittshöhe [mm], Knickstablänge L [mm]) iterativ ermittelt werden.

Die Berechnung nach der Eulerschen Formel ist dann gültig wenn der Schlankheitsgrad Lambda = βL Wurzel (A/I) einen Wert >105 annimmt, wobei A der Knickstabquerschnitt [mm²] und I das minimale Flächenträgheitsmoment [mm⁴]und L die Knickstablänge [mm]darstellt. Durch Variieren des Knickstabquerschnitts kann für die Knickstablänge ein Optimum in Bezug auf möglichst kurzer Stablänge und für die elastische Knickung mindestens erforderlichem Schlankheitsgrad Lambda gefunden werden.

In bevorzugten Ausführungsformen werden Knickstäbe oder generell Gestänge mit h von 1 mm bis 20 mm gewählt, vorzugsweise 1,5 mm bis 15 mm, insbesondere bevorzugt 2 mm bis 10 mm.

In bevorzugten Ausführungsformen werden Knickstäbe oder generell Gestänge mit b von 4 mm bis 50 mm gewählt, vorzugsweise 6 mm bis 40 mm, insbesondere bevorzugt 8 mm bis 30 mm.

Vorzugsweise ist das Verhältnis b/h von 1 bis 20, insbesondere bevorzugt von 1 bis 12, spezielle bevorzugt von 1,2 bis 10, z.B. von 1,5 bis 8. Insbesondere bevorzugt ist b>h, sodass die Auslenkung des Knickstabes durch die Knickbewegung in Richtung der Schmalseite (h) kontrolliert erfolgt. In der vorgesehenen Auslenkrichtung kann eine entsprechende Geometrie des Ventilkörpers berücksichtigt werden um der Auslenkungsbewegung ausreichend Raum einzuräumen.

Vorzugsweise werden Knickstablängen L von 30 mm bis 600 mm gewählt, insbesondere bevorzugt von 40 mm bis 500 mm, z.B. von 50 mm bis 400 mm, von 60 mm bis 300 mm oder von 70 mm bis 250 mm. Für eine Knickung sollte L größer als b sein, insbesondere größer als 2xb sein.

Der Entlastungsdurchmesser D des Abdichtelements ist vorzugsweise von 10 mm und 200 mm, insbesondere bevorzugt von 15 mm bis 150 mm, z.B. von 20 mm bis 130 mm, oder von 25 mm bis 110 mm, von 30 mm bis 100 mm, von 35 mm bis 85 mm oder von 40 mm bis 70 mm.

D zu b (D/b) ist vorzugsweise größer als 1,2, insbesondere bevorzugt größer als 1,3 oder größer als 1,4.

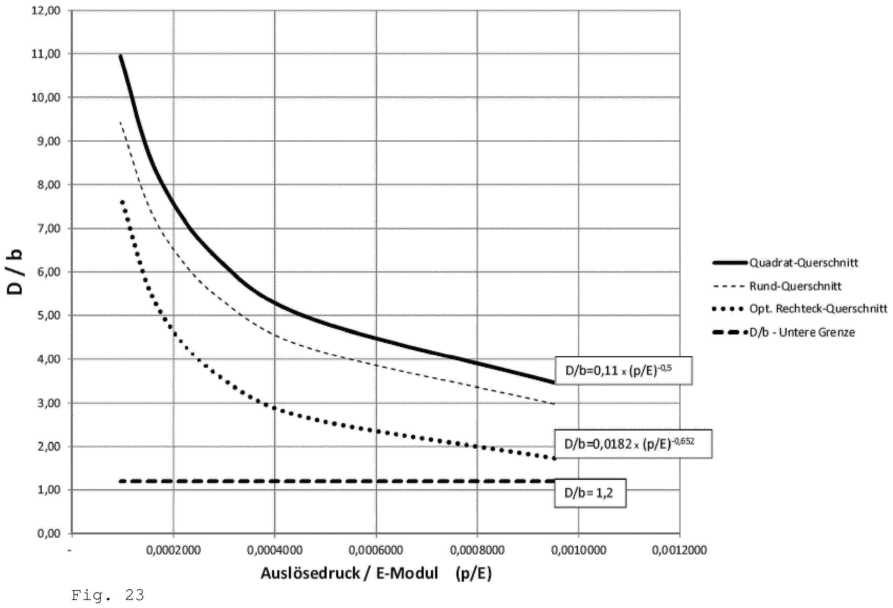

Erfindungsgemäße wurde als optimaler Bereich für rechteckige Querschnitte folgender Bezug ermittelt (s. auch Fig. 23):D/b = 0,0182x(p/E)^{-0,652}. Vorzugsweise ist D/b kleiner gleich diesem optimalen Wert. Vorzugsweise ist in erfindungsgemäßen Ausführungsformen D/b größer als 0,009x(p/E)^{-0,652}, insbesondere größer als 0,013x(p/E)^{-0,652}. Im speziellen ist D/b kleiner gleich als 0,11 x(p/E)^{-0,5}, insbesondere für rechteckige Knickstäbe. Vorzugsweise ist D/b = M x (p/E)^{-0,652}, mit M zwischen 0,003 und 0,0182, vorzugsweise zwischen 0,005 und 0,017 oder zwischen 0,007 und 0,016. Als Optimum für quadratische Querschnitte wurde der Bezug D/b = 0,11 x(p/E)^{-0,5} ermittelt. Vorzugsweise ist D/b kleiner gleich diesem optimalen Wert. Vorzugsweise ist D/b = N x(p/E)^{-0,5}, mit N zwischen 0,02 und 0,11, z.B. zwischen 0,035 und 0,10, oder zwischen 0,05 und 0,09. Bei all diesen Bezügen ist sinnvollerweise D/b größer oder gleich 1.

Vorzugsweise werden Knickstäbe mit einem E-Modul von 50.000 N/mm² bis 500.000 N/mm² gewählt vorzugsweise von 60.000 N/mm² bis 400.000 N/mm², von 150.000 bis 300.000 N/mm².

Das Erfindungsgemäße Gestänge oder das Abdichtelement ist vorzugsweise mit einem Sensor in funktioneller Verbindung, welcher eine Auslenkung oder eine Verschiebung detektiert, sodass ein Signal, welches zwischen geöffneten und geschlossenem Zustand des Ventils unterscheidet. Der Sensor kann auch Übergänge zwischen geschlossenem und geöffnetem Zustand detektieren und ein dementsprechendes Signal liefern. Gemäß der erfindungsgemäßen Ausführungsform der Knickstabvorrichtung kann dieser Knickstab so ausgebildet sein, dass er bedingt durch das Auslenken im Öffnungsfalle und der damit verbundenen Generierung eines Auslenkwinkels zur Detektion der Auslenkung mit einem oder mehreren Kicksensoren verbunden sein kann, wobei die Knicksensoren (wie z.B. Druckaufnehmer, Drucktransmitter, Dehnungsmesstreifen) im Falle des Knickens ein Signal generieren.

Die Knicksensoren können als Typ eines der nachfolgenden bekannten Sensoren wie Längen- oder Ausdehnungssensoren, Distanz- oder Abstandssensoren, Winkelsensoren oder eine Kombination derer sein.

Dieses Signal kann zu Steuerstellen übertragen und von diesem empfangen werden, damit eine entsprechende Bedienungsreaktion eingeleitet werden kann. Bei einer Ausführungsform kann beispielsweise ein Knicksensor vorgesehen sein, der im Knickstab selbst eingebaut ist und als Teil des Knickstabes wirkt. Bei einer integrierten Form des Knicksensors kann dieser vorzugsweise im oberen Teil oder im unteren Teil (z.B. am Abdichtelement) der Knickstabvorrichtung eingebaut sein.

Es können ein oder mehrere Knicksensoren zur Erfassung der Knickung eingesetzt werden um eine Anzeige und Erfassung der Knickung rechtzeitig anzeigen zu können.

Der Bediener einer mit Knickstabsicherung ausgestatteten Anlage kann über Knicksensoren automatisch ermitteln, ob sich das Überdruckventil im druckentlasteten Zustand befindet.

Vorzugsweise wird das Abdichtelement durch Führungen im Ventil positioniert, sodass es während der Öffnung des Ventils in Richtung des Gestänges verschoben wird. Das Abdichtelement kann in Form einer Scheibe und/oder eines Stößels (z.B. mit einer Abdichtscheibe) geformt sein.

Die dem Innenraum der Rohrleitung oder dem Anlagenteilstück zugewandte Fläche das Abdichtelements ("Entlastungsfläche") und/oder des Ventilkörpers kann konstruktiv auf das jeweilige Anlagenelement dimensioniert werden. Diese Fläche kann kreisförmig, quadratisch, rechteckig, vieleckig, rund, unrund oder der Rohrleitung bzw. Anlagestück davon angepasste Entlastungsfläche einnehmen. Die Entlastungsfläche kann so dimensioniert und positioniert sein, dass der gesamte Entlastungsquerschnitt im Falle des Auftretens von Unter- oder Überdruck freigegeben wird und das Ventil oder das Abdichtelement samt Gestänge als Ganzes aus der Rohrleitung bzw. dem Anlagenstück ausgebaut und erneuert werden kann. Eine einfache Erneuerung ist deshalb vorteilhaft, da das Überdruckventil wieder rasch nach Erneuerung oder Kontrolle eventueller radial oder axial angebrachten Dichtungen und des Gestänges, funktionsfähig gemacht werden soll ohne die Rohrleitung bzw. den Anlagenteil davon oder das Überdruckventil ausbauen zu müssen.

Das Überdruckventil bzw. deren wesentlichen Teile, wie Abdichtelement, Gestänge, Halterung, eventueller Abdichtungen, könne in eine Hülse aufgenommen werden, welche in der Rohrwand liegt. Die Wand der Hülse kann zum Abdichtelement hin durch Dichtungen abgedichtet sein. Die Hülse kann zur Rohrwand hin durch Dichtungen abgedichtet sein.

Die dem Innenraum der Rohrleitung zugewandten Fläche des Abdichtelements bzw. das Abdichtelement als gesamtes kann rund, kreisförmig, quadratisch, rechteckig, länglich, vieleckig, insbesondere 5-, 6- 7,- oder 8-eckig geformt sein. In der Längsachse kann es gleichmäßig dimensioniert oder aber auch verengend oder erweiternd, z.B. kegelförmig geformt sein. Die Hülse oder das Überdruckventil können ebenfalls gemäß diesen Formen dimensioniert sein.

Vorzugsweise hat der Innenraum der Rohrleitung einen Durchmesser von 10 mm bis 1000 mm, insbesondere bevorzugt von 30 mm bis 800 mm, von 40 mm bis 700 mm, von 50 mm bis 600 mm, von 60 mm bis 500 mm, von 70 mm bis 400 mm, von 80 mm bis 350 mm, von 90 mm bis 300 mm, von 100 mm bis 250 mm. Die Abflussleitung hat vorzugsweise einen Innendurchmesser von 10 mm bis 800 mm, insbesondere bevorzugt von 20 mm bis 700 mm, von 30 mm bis 600 mm, von 40 mm bis 500 mm, von 50 mm bis 400 mm, von 60 mm bis 300 mm, von 70 mm bis 200 mm, von 80 mm bis 100 mm.

Innerhalb des Überdruckventils kann ein Sensor eingebaut werden, welcher die Knickung anzeigt und so den Ort der Druckentlastung in einem Anlagensystem besser lokalisierbar wird.

Die erfindungsgemäße Rohrleitung wird insbesondere zum Transport von hochviskosen und/oder thermisch instabilen Fluiden benutzt. Solche Fluide können in Wärmetauscherleitungen transportiert werden, um eine Temperaturregulierung des Fluids zu ermöglichen. Auch in der erfindungsgemäßen Rohrleitung kann eine Temperaturregulierung bewerkstelligt werden. Die erfindungsgemäße Rohrleitung kann eine Wärmetauscherleitung sein. Die Temperierung kann durch thermische Isolierung der Rohrleitung und/oder durch Heiz- oder Kühlelemente (8) erfolgen. Um das Fluid auf einer gewünschten Temperatur zu halten kann eine einfache thermische Isolierung ausreichend sein, wenn das Fluid selbst die gewünschte Wärme zum Transport führt, bzw. aufgrund von Reibungsverlusten erzeugt. Die Rohrleitung ist vorzugsweise ein massiver Block eines wärmeleitenden Materials mit ausreichender Wärmekapazität, sodass bei äußerer Wärmeisolierung eine homogene Wärmeverteilung an den Innenwänden der Rohrleitung eintritt. Die Rohrleitung bzw. das Überdruckventil kann auch ein in Form eines Verbindungsstücks ("fitting") zum Verbinden von Rohren aufgenommen sein. In bevorzugten Ausführungsformen werden Heiz- oder Kühlelemente vorgesehen, z.B. Wärmeträgerleitungen, welche das Innere auf einer gewünschten Temperatur halten.

In der Rohrleitung ist vorzugsweise ein Heizelement im Bereich der Überdruckventils bzw. dem Abdichtelement vorgesehen. Durch ein derartiges Element kann ein Fluid im Bereich des Überdruckventils temperiert werden womit ein Erhärten von erstarrbaren Materialen vermieden wird oder sich die Viskosität des Fluides erniedrigen lässt und ein Ausspülen durch den Durchfluss des Fluids in der Rohrleitung bewirken lässt. Durch Beheizung kann verhindert werden, dass im Fluid Viskositätsunterschiede im Bereich vor dem Überdruckventil entstehen bzw. sich Fluide ablagern, womit bei Verwendung von thermisch instabilen Fluiden keine exotherm reaktiven Bereiche vor dem Überdruckventil entstehen.

Das Heizelement kann ein elektrisches Heizelement, Induktionsspulen oder Heizkanäle, in denen ein Heizmedium geführt werden kann, aufweisen. Alternativ können derartige Kanäle zum Führen einer Kühlflüssigkeit verwendet werden, wenn das gewählte Fluid im Bereich des Überdruckventils gekühlt werden soll.

Die Temperierung der Rohrleitung wird vorzugsweise derart eingestellt, sodass im Inneren beim Transport eines Fluids wie Cellulose/NMMO/Wasser bei 90°C maximal ein Temperaturunterschied (Temperaturspreizung) von maximal 10°C, vorzugsweise maximal 8°C, maximal 6°C, maximal 5°C, maximal 4°C, maximal 3°C, maximal 2°C, maximal 1°C, im Inneren der Rohrleitung, an den Wandabschnitten, inklusive dem Überdruckventil, der Rohrleitung, auftritt.

Die Rohrleitung kann ein Mischelement, wie beispielsweise in der US 7,841,765 beschrieben, aufweisen. Die Erfindung ist nicht auf spezielle Mischelemente limitiert, sondern es können diverse Mischelemente, welche in Rohrleitungen aufgenommen werden können, ausgewählt werden. Vorzugsweise werden statische Mischelemente verwendet. Das Mischelement soll insbesondere den Fluidstrom im Inneren der Rohrleitung, insbesondere im Bereich des Überdruckventils, durchmischen. Dadurch werden Temperatur-, Viskositäts- und Druckinhomogenitäten des Fluides vermieden, da das Fluid ständig durchmischt und homogenisiert wird. Die durch Mischelemente erzeugte Reibungswärme kann durch die Temperierung der Rohrleitung abgeführt werden. Übliche Mischerelemente sind statische Mischer, wie beispielsweise in der WO 2009/000642 beschrieben, bzw. innentemperierte statische Mischer. Nachdem die hochviskosen Fluide in den Bereichen eines Überdruckventils abkühlen können, da das Abdichtelement schlecht temperierbar ist, wodurch sich unterschiedliche Temperatur- und Viskositätsverhalten ergeben, resultiert daraus wiederum ein unterschiedliches Fließverhalten des Fluids. Daher wird erfindungsgemäß das Mischelement soweit in die Rohrleitung, bzw. über den Überdruckventilbereich eingeführt, dass auch im Bereich des Überdruckventils, bzw. in der gesamten Rohrleitung eine gute Durchströmung gewährleistet ist.

Erfindungsgemäß hat sich besonders vorteilhaft heraus gestellt, dass die Rohrleitung so konstruiert wird und der Einbau der statischen Mischelemente so durchgeführt wird, dass eine aktive Strömungsbeeinflussung im Bereich des Überdruckventils entsteht bzw. erzwungen wird.

Die Rohrleitung als Verbindungsstück kann über verschiedene Anschlussarten in eine Fluidleitung, insbesondere eine Wärmetauscherleitung, eingebaut werden, wie z.B. über Flanschverbindungen, Klemmverbindungen, Gewindeverbindungen, Schweißverbindungen, damit der Verbund zwischen der Leitung, bzw. den Abschnitten der Leitung hergestellt werden kann. Das Verbindungsstück kann als Fluidverteilstück unterschiedlicher Ausformung (T-Stück, L-Stück, Y-Stück) dienen. Die Rohrleitung bzw. die Verbindungsstücke können aus entsprechenden Edelstählen, Normalstählen, hoch legierten chemisch resistenten Stählen, sonstigen Metallen und Metall Legierungen, sowie hochfesten Kunststoffen hergestellt werden, die prozessbeständig (d.h. chemisch, temperatur- und druckbeständig) sind. Dem Fachmann ist es überlassen, diese Rohrleitung mit Bezug auf Temperatur und Druck zu designen und in die Konstruktion und Fertigung einfließen zu lassen.

Vorzugsweise wird ein Absperrelement eingesetzt, welches großflächig bei einem vorbestimmten Überdruck eine Öffnung freigibt um reichlich Fluidaustritt zu gewährleisten. So kann beispielsweise das Überdruckventil in einer entsprechend dimensionierten Halterung in der Innenwand der Rohrleitung fixiert, z.B. eingeklemmt, vorzugsweise angeflanscht, werden. Das Überdruckventil kann auch in Form einer teilweisen Bohrung als Wandbaustein in die Wand der Abflussleitung eingesetzt werden.

In bevorzugten Ausführungsformen werden Absperrelemente eingesetzt, welche mindestens zu etwa 70% der dem Inneren der Rohrleitung zugewandten Fläche, also der exponierten Fläche ("Entlastungsfläche"), eine Öffnung beim vorbestimmten Überdruck freigeben. In weiteren oder besonders bevorzugten Ausführungsformen öffnet das Absperrelement zu mindestens etwa 20%, 30%, 40%, 50%, 55%, 60%, 65%, 70%, 72%, 74%, 76%, 78%, 80%, 82%, 84%, 86%, 88%, 90%, 92%, 94%, 96%, 98% oder zu 100%, d.h. die komplette durch das Absperrelement versperrte Fläche kann bei Überdruck freigegeben werden.

Vorzugsweise entspricht der Querschnitt der Abflussleitung und oder der trennenden Fläche des Absperrelements im Vergleich zum Querschnitt der Rohrleitung mindestens 20%, mindestens 25%, mindestens 30%, mindestens 35%, mindestens 40%, mindestens 50%, mindestens 55%, mindestens 60%, mindestens 65%, mindestens 70%, mindestens 75%, oder mindestens 80%.

Das Absperrelement kann flach oder gewölbt sein. In speziellen Ausführungsformen ist das Absperrelement dem Inneren der Rohrleitung entgegen oder zugewandten Fläche mittig gewölbt, also konkav bzw. konvex zur Richtung des Inneren der Rohrleitung. Speziell bevorzugt wird die dem Innenraum zugewandte Fläche des Absperrelements konform zur Kontur der Innenseite der Rohrwand gestaltet oder gewölbt.

Es kann eine Bohrung in der Innenwand der Rohrleitung im Bereich des Absperrelements vorgesehen werden. Diese Bohrung kann der kontrollierten Druck-Entlastung des Innenraumes oder der Temperatur- oder Druckkontrolle dienen. Die erfindungsgemäße Rohrleitung, insbesondere als Verbindungs- oder Verteilstück, kann mit entsprechenden Bohrungen versehen werden, damit Druck und Temperatur abgenommen, kontrolliert und überwacht werden können. Bei der Förderung von hochsensitiven Polymermassen (z.B. Cellulose-lösungen bestehend aus Cellulose, Aminoxid und Wasser) hat es sich erfindungsgemäß auch als vorteilhaft erwiesen, dass eine Bohrung angebracht werden kann, damit die Qualität der Polymermasse, beginnend von der Lösungsherstellung bis zur Verarbeitung abschnittsweise hinsichtlich der Qualität der Spinnmasse mit Bezug auf die Lösungsviskosität und Spinnmassezusammensetzung sowie das Abbauverhalten kontrolliert werden kann. Die Bohrung kann daher eine Entnahmebohrung sein. Wird eine Probenahmenstelle vorgesehen, so kann ein speziell konstruiertes Probenahmeventil derart ausgeführt sein, dass sich im Probenahmekanal nach Probenahme keine Restmasse befindet, da diese in den Hauptstrom zurückgedrängt wird.

In speziellen Ausführungsformen wird diese Bohrung unmittelbar vor dem Absperrelement vorgesehen. Die Bohrung kann dazu verwendet werden um abgelagerte viskose Fluide vor dem Absperrelement abzuführen, z.B. zur Probenahme, bzw. dessen Temperatur oder Druck zu messen. Daher weist die Bohrung in vorzugsweisen Ausführungsformen einen Temperatur- und/oder Drucksensor auf. Temperatur- oder Drucksensoren können eingesetzt werden um bei Abweichungen von einer Solltemperatur oder einem Solldruck durch die Bohrung Fluid abzulassen. Dieser Ablass kann kontinuierlich oder sporadisch vorgenommen werden. Hierzu weist die Entlastungsbohrung vorzugsweise ein verschließbares Ventil auf.

Das Gestänge kann in der Abflussleitung oder abseits der Abflussleitung vorgesehen werden. Vorzugsweise ist die Abflussleitung so positioniert, dass beim Überdruck das Absperrelement sich so verschiebt, sodass zwar die Abflussleitung freigegen wird, jedoch der Ventilinnenraum mit dem Gestänge versperret bleibt. Vorzugsweise steht die Abflussleitung vom Ventilinnenraum mit dem Gestänge ab, z.B. 90°.

Die erfindungsgemäße Rohrleitung kann vorzugsweise in Form eines Verbindungselements, zum Verbinden von Rohren, im speziellen in Form eines komplett zusammengebauten massiven Blocks, zur Verfügung gestellt werden. Die Rohrleitung bzw. das Verbindungsstück kann in einem Apparateverband z.B. von Reaktoren, Pumpen, Druckbehältern, Filtern, Wärmetauscherleitungen, Wärmetauschern, und/oder Extrudern eingesetzt werden.

Das Überdruckventil, bzw. jeder Teil davon, z.B. das Absperrelement, kann unabhängig voneinander aus verschiedenen Materialien hergestellt sein, wie Stahl, Edelstahl, Keramik, Sintermetallen, Aluminium, Kunststoff, Buntmetallen, Edelmetallen. Bevorzugte Werkstoffe sind alle Eisen, Eisenlegierungen, Chrom-Nickelstähle, Nickelstähle (z.B. Hastelloy Materialien), Titan, Tantal, Siliziumcarbid, Glas, Keramik, Gold, Platin und auch Kunststoffe. Spezielle Materialien sind Legierungen mit hohem Molybdängehalt, bzw. Nickel, Chrom, und Molybdän Legierungen zur Beständigkeit gegen Lochfraß und Spaltkorrosion, Nickel-Kupfer-Legierungen mit hoher Zugfestigkeit. Materialbeispiele sind Hastelloy C (hohe Korrosionsfestigkeit), Hastelloy B (ausscheidungshärtende Hochtemperaturlegierung), Inconel (Beständigkeit gegen Spannungskorrosionsrissen in petrochemischen Anwendungen), Incoloy (hohe Festigkeit als auch Beständigkeit gegen hohe Temperaturen und gegenüber Oxidierung und Aufkohlung), Monel (hohe Zugfestigkeit, beständig gegenüber Korrosion).

In vorzugsweisen Ausführungsformen ist das Überdruckventil für den Transport von Fluiden durch die Rohrleitung bei hohen Drücken von mindestens 40 bar bis 1000 bar, vorzugsweise mindestens 50 bar, mindestens 70 bar, mindestens 100 bar, mindestens 200 bar, mindestens 300 bar, mindestens 400 bar, mindestens 500 bar, mindestens 600 bar, mindestens 700 bar, mindestens 800 bar, eingerichtet, z.B. durch Wahl geeigneter Materialien bzw. Materialstärken und Dimensionen. In weiteren Ausführungsformen ist das Überdruckventil für den Transport von Fluiden durch das Verbindungselement bei hohen Drücken (Auslösedruck) bis maximal 1000 bar, vorzugsweise bis 60 bar, bis 80 bar, bis 120 bar, bis 250 bar, bis 350 bar, bis 450 bar, bis 550 bar, bis 650 bar, bis 750 bar, bis 900 bar, eingerichtet. Im Speziellen wird das Ventil für Auslösedrücke von 15 bar bis 500 bar, vorzugsweise von 20 bar bis 400 bar, insbesondere bevorzugt von 25 bar bis 300 bar, im speziellen von 30 bar bis 250 bar, eingerichtet.

Die vorliegende Erfindung liefert weiters ein Verfahren zum Transport eines viskosen Fluids durch die erfindungsgemässe Rohrleitung. Die Erfindung betrifft die Verwendung der erfindungsgemäßen Rohrleitung, insbesondere zum oder während dem Transport eines viskosen Fluids durch die Rohrleitung. Das Verbindungselement kann beispielsweise zwischen einzelnen Bauteilen einer Rohrleitung zum Transport eines viskosen Fluids angebracht sein.

Vorzugsweise ist das viskose Fluid thermisch instabil. Thermisch instabile Fluide sind beispielsweise Cellulose-Lösungen, wie Cellulose Aminoxid Lösungen, in speziellen Lösungen von tertiärem Aminoxid und Wasser. Solche Lösungen können neben Stabilisatoren wie z.B. Gallussäurepropylester, organische oder anorganische Basen wie z.B. Natronlauge enthalten. Weiters können solche Cellulose/Aminoxid und Wasser Lösungen auch produktverändernde Additive, sogenannte Inkorporationsmedien, enthalten. Celluloselösungen, im Aminoxidsystem hergestellt, zeichnen sich dadurch aus, dass sie beim Erkalten kristallisieren aber bei einer Temperatur von ca. 72 - 75 °C geschmolzen werden können. Ein Beispiel ist eine Cellulose-NMMO-Lösung wie in der EP 789 822 beschrieben. Das Fluid kann eine wässrige Aminoxidlösung unterschiedlicher Konzentrationen sein. Thermisch instabile Fluide sind solche, bei denen die Gefahr einer Temperaturerhöhung während dem Transport durch das Verbindungsstück bzw. die Wärmetauscherleitung besteht. Temperaturerhöhungen können z.B. aufgrund von exothermen Reaktionen, insbesondere chemischen Reaktionen, oder aufgrund von Reibungswärme beim Transport hochviskoser Fluide auftreten. Weitere Fluide sind insbesondere erstarrbare Fluide, insbesondere "hot-melts", wie Polymere, Polycarbonate, Polyester, Polyamide, Polymilchsäure, Polypropylen, etc. Vorzugsweise Polymere sind Biopolymere wie Proteine, Kohlenhydrate, Nukleinsäuren oder Mischungen davon. Das Fluid kann ein thixotropes Fluid, insbesondere eine Spinnlösung, sein. Spezielle Fluide haben eine Schmelztemperatur von mindestens ca. 40°C, mindestens 50°C, mindestens 55°C, mindestens 60°C, mindestens 65°C, mindestens 70°C, mindestens 75°C. Das Fluid kann bei beispielhaften Temperaturen von mindestens ca. 40°C, mindestens 50°C, mindestens 55°C, mindestens 60°C, mindestens 65°C, mindestens 70°C, mindestens 75°C, mindestens ca. 80°C, mindestens 85°C, mindestens 90°C, mindestens 95°C, geführt werden. Das Verbindungsstück ist für den Transport dieser Fluide über den Schmelztemperaturen - z.B. gemäß gewählter Temperiermittel - ausgelegt. Vorzugsweise ist die Nullscherviskosität des Fluids im Bereich von 100 bis 15.000 Pas, insbesondere zwischen 500 bis 10.000 Pas.

Das Überdruckventil bzw. das Absperrelement wird vorzugsweise für entsprechend der vorgesehenen Fluidflüsse (bzw. Drücke) dimensioniert. Vorzugsweise ist die Fläche der Überdruckventils bzw. des Absperrelements zwischen 0,01 und 0,4 mm² pro kg des transportierten Fluids, insbesondere zwischen 0,02 und 0,3 mm² pro kg.

Die vorliegende Erfindung wird weiter durch die folgenden Figuren und Beispiele illustriert ohne auf diese speziellen Ausführungsformen der Erfindung beschränkt zu sein.

### Figuren:

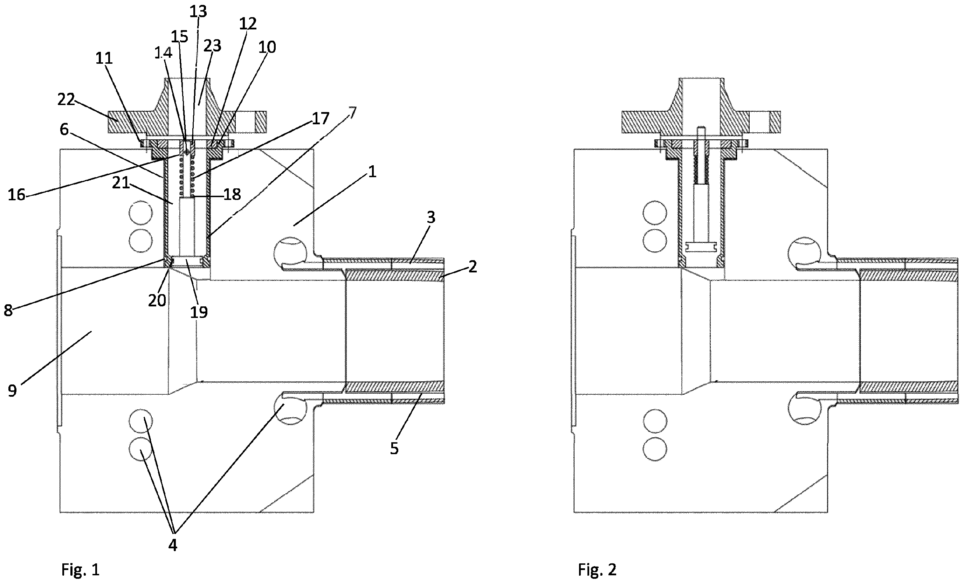

Figur 1 zeigt eine Rohrleitung als Verbindungsstück (1), durch welches Fluide geleitet werden können. Gezeigt wird eine Einspeiseleitung (2) mit einem Doppelmantel als Isolierung (3) temperiert, damit das Fluid temperatur- und viskositätskonstant gehalten werden kann. Der um die Einspeiseleitung (2) befindliche Doppelmantel (3) kann mit den Wärmeträgermediumbohrungen (4) des Verbindungsstückes verbunden sein, damit das gleiche Wärmeträgermedium (5) zwischen dem Doppelmantel (3) der Einspeiseleitung (2) und dem Verteilstück (1) geführt werden kann.

Im Verbindungsstück (1) ist eine Bohrung (6) zur Aufnahme eines Überdruckventils (7) vorgesehen. Das zylindrisch ausgebildete Überdruckventil (7) ist über Dichtungen (8), welche am äußeren Umfang in eine Nut eingelegt ist, gegenüber dem Rohrinnenraum (9) abgedichtet. Die Dichtungen (8) können in unterschiedlicher Form und Ausführung auf den jeweiligen Anwendungsfall zentriert ausgebildet sein. Das zylindrische Überdruckventil (7) ist am oberen Ende mit einem Flansch (10) versehen und wird über Schrauben und Bolzen (11) mit dem Verbindungsstück (1) verbunden. Der obere Flansch (10) ist so ausgebildet, dass ein Deckel (12) in das Überdruckventil (7) eingelassen ist, wobei am Deckel (12) eine Halterung als Führungshülse (13) angebracht ist. Diese Halterung (13) dient zur Führung und Aufnahme des Gestänges (14), wobei das Gestänge (14) formschlüssig mit der Halterung (13) über einen Bolzen (15) verbunden ist. Die Halterung (13) ist so ausgebildet, dass am unteren Ende der Halterung (13) eine Bund- und Sicherungsfläche (16) ausgebildet ist. An dieser Bund- und Sicherungsfläche (16) sitzt eine Druckentlastungsfeder (17), welche über dem äußeren Umfang des Gestänges (14) angebracht ist. Zur Druckentlastungsfederabstützung wird das Gestänge (14) je nach Dimensionierung der Druckentlastungsfederlänge mit einer Bund- und Sicherungsfläche (18) ausgeführt. Am unteren Ende des Gestänges (14) sitzt das Abdichtelement in Form einer Scheibe (19), wobei am Umfang der Scheibe (19) eine Dichtung (20) zur Abdichtung gegenüber dem Rohrinnenraum (9) angebracht ist. Die Abdichtung (20) kann am äußeren Umfang der Dichtung (20) oder aber auch auf der Planfläche der Scheibe angebracht sein. In diesem Falle ist das Überdruckventil (7) so ausgeführt, dass die Dichtung gegenüber dem Innenraum abdichtet. Im Falle des eintretenden Überdruckes wird die Scheibe (19) von der Innenseite des Überdruckventils (7) nach oben gedrückt wobei die Druckentlastungsfeder (17) entsprechend der dimensionierten Federkonstante zusammengedrückt wird und der Überdruck im Innenraum (9) über den Überdruckventilsinnenraum (21) und dem Flansch (22) und dessen Abflussleitung (23) nach außen abgeleitet wird.

Figur 2 stellt die Rohrleitung der Figur 1 im druckentlasteten geöffneten Fall dar.

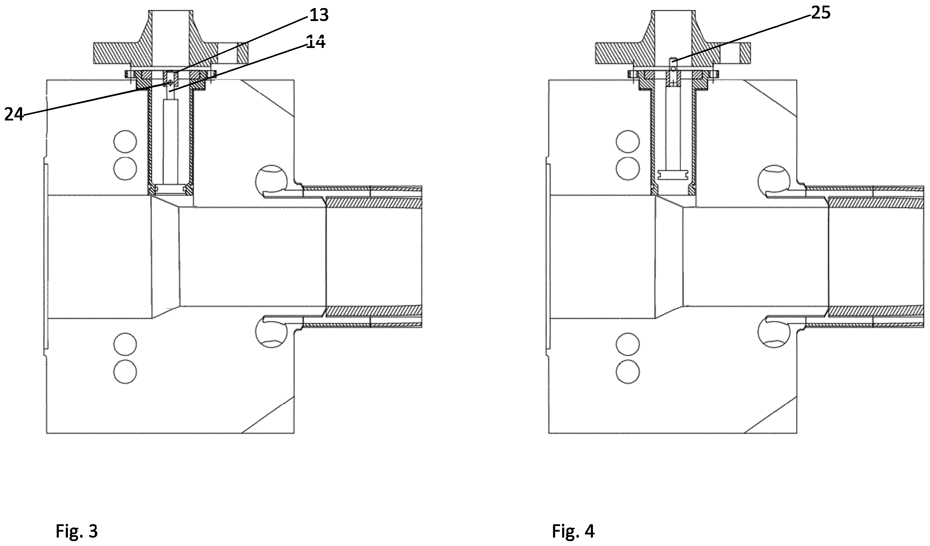

Figur 3 stellt ein Überdruckventil (7) nach Figur 1 und Figur 2 dar, wobei in der Halterung (13) das Gestänge (14) über einen dem Öffnungsdruck entsprechend dimensionierten Scherbolzen (24) verbunden ist. Kommt es im Fluidinnenraum zu einem Überdruck wird der Scherbolzen (24) abgeschert, das Gestänge (14) schlägt am unteren Ende der Führungshülse (13) an und gibt durch den Hub des Gestänges (14) die Öffnung im Innenraum (9) zum Abbau des Überdrucks frei und der obere Teil des Gestänges tritt durch den Deckel (12) des Überdruckventils (7) durch (dargestellt in Figur 4 - Ziffer 25) .

Figur 4 stellt die Rohrleitung der Figur 3 im druckentlasteten geöffneten Fall dar.

Figur 5 stellt ein Überdruckventil (7) nach Figur 1 und Figur 2 dar, wobei in der Halterung (13) das Gestänge (14) als Knickstab (26) ausgebildet ist und nicht-lösbar mit der Halterung (13) verbunden ist. Die Verbindung des Knickstabes (26) mit der Halterung (13) kann auch gelenkig erfolgen.

Kommt es im Rohrinnenraum (9) zu einem Überdruck wird der auf den Öffnungsdruck dimensionierte Knickstab (26) deformiert. Durch den deformierten Knickstab (26) wird das Abdichtelement als Scheibe (19), welche fest mit dem Knickstab (26) verbunden ist, zurückgedrückt und gibt den Rohrinnenraum (9) zum Abfluss des Fluids im Überdruck frei.

Figur 6 stellt die Rohrleitung der Figur 5 im druckentlasteten geöffneten Fall dar.

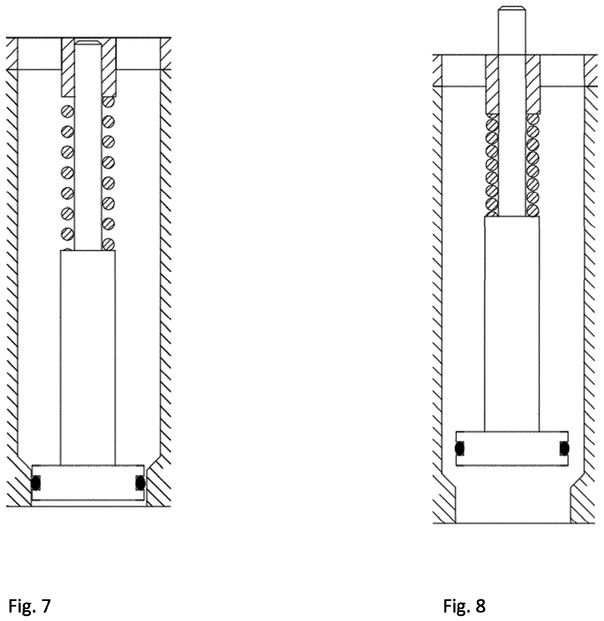

Figur 7 stellt das Detail des federbelasteten Gestänges (14) im geschlossen Zustand des Überdruckventils (7) dar.

Figur 8 stellt das Gestänge der Figur 7 im druckentlasteten Fall dar.

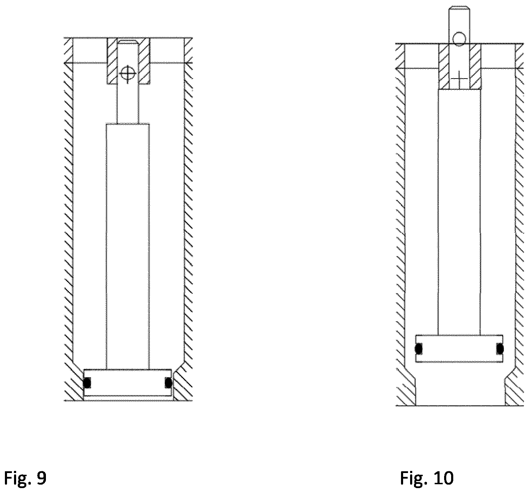

Figur 9 stellt das Detail des Gestänges (14), welches mit dem Scherbolzen (24) verbunden ist im geschlossen Zustand des Überdruckventils (7) dar.

Figur 10 stellt das Gestänge der Figur 9 im druckentlasteten Fall und den abgescherten Scherbolzen (24) dar.

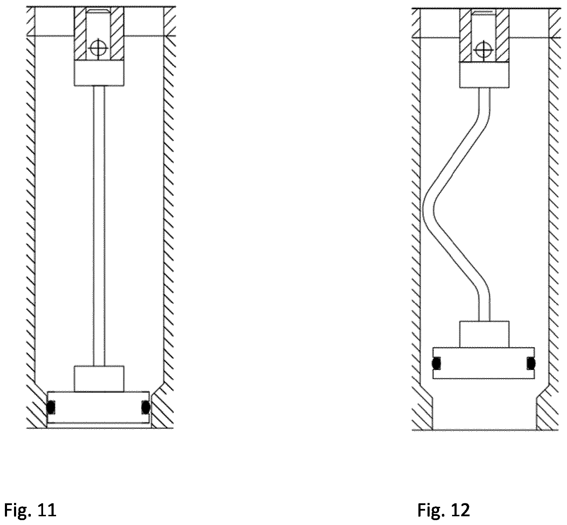

Figur 11 stellt das Detail des Knickstabes (26), welcher mit der Halterung (13) verbunden ist im geschlossen Zustand des Überdruckventils (7) dar.

Figur 12 stellt das Gestänge der Figur 11 im druckentlasteten Fall und den geknickten Knickstab (26) dar.

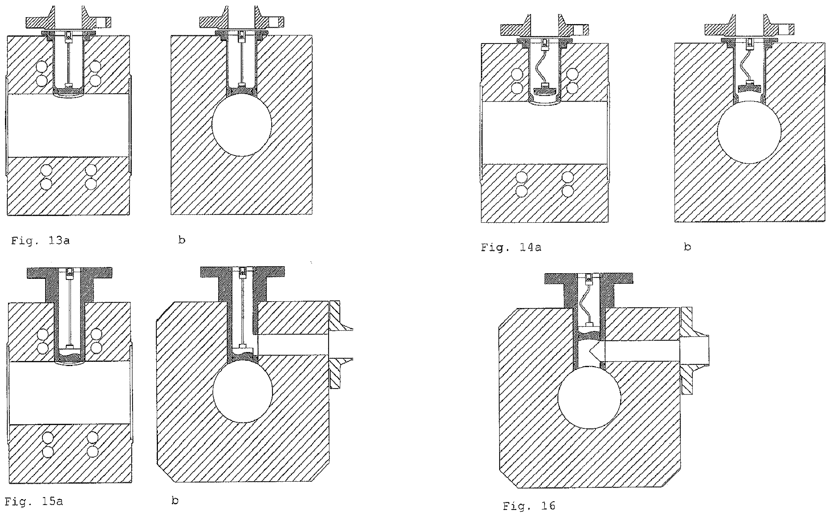

Figuren 13 a und b zeigen zwei zueinander rechtwinkelige Seitenansichten einer Rohrleitung mit dem Überdruckventil mit Knickstab in der geschlossenen Position. Die Kontur des Abdichtelements ist konform mit der Kontur der Rohrinnwand ausgeführt, sodass absolute Totraumfreiheit erreicht wird.

Figuren 14 a und b stellen die Rohrleitung der Figur 13 im druckentlasteten geöffneten Fall dar.

Figuren 15 a und b zeigen zwei zueinander rechtwinkelige Seitenansichten einer Rohrleitung mit dem Überdruckventil mit Knickstab in der geschlossenen Position.

Figur 16 zeigt die geöffnete Position. Die Kontur des Abdichtelements ist konform mit der Kontur der Rohrinnwand ausgeführt, sodass absolute Totraumfreiheit erreicht wird. Zudem wird die Abflussleitung seitlich vorgesehen, sodass im geöffneten Zustand der Figur 16 der Ventilinnenraum mit dem Gestänge durch das Abdichtelement abgedichtet und Fluid-frei bleibt.

Figur 17 zeigt eine Rohrleitung mit einem Überdruckventil (7) mit einem Gestänge (14) in Knickstab-Ausführung, welches über Gelenke (27) mit der Halterung (13) und dem Abdichtelement (19) gelenkig verbunden ist. Fig. 17a zeigt den abgedichteten Zustand der Rohrleitung und Fig. 17b den geöffneten Zustand mit geknicktem Gestänge. Das Abdichtelement ist in Form eines Stößels, welcher über Führungselemente (28) im Ventil (7) zur Führung während des Öffnungsvorgangs zusätzlich gegen seitliche Verschiebung gesichert ist.

Figur 18 zeigt eine Rohrleitung mit einem Überdruckventil gemäß Fig. 17 in seitlicher Ansicht. Das Knickstab-Gestänge ist im Querschnitt rechteckig gestaltet und ist in der Ansicht der Fig. 18 breiter als in Fig. 17. Während des Knickvorgangs erfolgt die Knickung entlang der Schmalseite des Querschnitts (Fig. 17b).

Fig. 19 ist eine weitere Seitenansicht einer Rohrleitung mit einem Überdruckventil, wobei im Unterschied zu Fig. 18 die Abflussleitung (23) seitlich angebracht ist.

Figur 20 zeigt einen Knickstab mit einem Gelenk (27) am oberen Ende und einer Rundung am unteren Ende zur gelenkigen Aufnahme in eine Halterung oder in ein Abdichtelement. Charakteristische Kennzeichen des Knickstabes sind die Länge (L), die Querschnittshöhe (h) und die Querschnittsbreite (b). Zwei seitliche zueinander 90° gedrehte Ansichten sind gezeigt (Fig. 20a und 20b).

Figur 21 zeigt eine Vergrößerung der Gelenke und deren Aufnahme in das Ventil bzw. das Abdichtelement, wie in Fig. 17 und 18 dargestellt.

Figur 22 zeigt die Abdichtung einer Rohrleitung durch ein Abdichtelement (19), welches konform zur Kontur der Innenseite der runden Rohrwand vorliegt. Das Ventil (7) ist ebenfalls konform ausgeführt. Dichtungselemente (20 und 8) zwischen dem Abdichtelement und dem Ventil bzw. zwischen dem Ventil und der Rohrwand sind dargestellt. Der Entlastungsdurchmesser (D) der durch das Abdichtelement freigegebenen Fläche ist gekennzeichnet. Neben der in Figur 22 dargestellten radialen Dichtungsausführung ist es auch möglich, die Abdichtung als Axialdichtung auszuführen.

Figur 23 zeigt eine Darstellung der Parameter D (Entlastungsdurchmesser) durch b (Querschnittsbreite des Gestänges) zu p (Auslösedruck) durch E (E-Modul des Gestänge-Materials) bei optimalen Bedingungen für quadratische, runde und rechteckige Gestänge-Querschnitte sowie den Mindestwert für D/b.

### Beispiel 1:

Gemäß diesem Beispiel wird eine Rohrleitung mit einem Überdruckventil mit einem Knickstab, wie in Fig. 5 dargestellt, eingesetzt.

Im Betrieb wurde dieses Leitung mit einer Cellulose-NMMO-Wasser Lösung (Cellulose: 12,9%, NMMO 76,3%, Wasser 10,8%, alle % in gew.-%) bei einer Temperatur von 90°C und einem Druck von 30 bar getestet. Die Lösung wurde in den ersten Wärmetauscher über eine Pumpe unter Druck eingebracht. Am Ende des zweiten Wärmetauschers befand sich ein Filter um den Druck in der Leitung aufrecht zu erhalten. Die beiden Wärmetauscher wurden mit der erfindungsgemäßen Rohrleitung mit dem Überdruckventil als Verbindungsstück verbunden.

Während des Probebetriebs konnten keine unregelmäßigen Temperaturen und Drücke festgestellt werden. Bei einem simulierten Überdruck von 100bar öffnete das Überdruckventil wodurch der Druck unter den normalen Arbeitsdruck fiel.

Es wurden in regelmäßigen Abständen Fluidproben entnommen, hinsichtlich ihrer thermischen Stabilität mittels DSC-Analyse untersucht und mit der Stabilität von "frischer" Cellulose-NMMO-Wasser Lösung verglichen. Selbst nach einer Laufzeit von mehreren Tagen konnte keine Reduktion der thermischen Stabilität der Cellulose-NMMO-Wasser Lösung im Bereich des Überdruckventils im Vergleich zu "frischer" Lösung festgestellt werden.

### Beispiel 2:

Durch ein Wärmetauscherleitungssystem bestehend aus Wärmetauschern und den erfindungsgemäßen Rohrleitungen als Verteilstücken wurde eine Polymerlösung - zur Verwendung als Spinnlösung mit folgender Zusammensetzung von der Spinnlösungsherstellung bis zur Verarbeitung dieser an einer Spinnmaschine transferiert.

Die Spinnmasse bestehend aus einer Mischung von Zellstoffen des Typs MoDo Crown Dissolving-DP 510-550 und Sappi Saiccor DP 560-580 wurden in folgender Zusammensetzung kontinuierlich hergestellt Cellulose 12,9%; Aminoxid (NMMO - N-Methyl-Morpholin-N-Oxid) 76,3 %; Wasser 10,8%.

Die Lösungsherstellung erfolgte nach erfolgter wässriger enzymatischer Vorbehandlung und Suspensionsherstellung durch Abdampfen von überschüssigem Wasser unter Vakuum in einem kontinuierlich durchströmten Reaktionsgefäß bei einer Temperatur von 97 bis 103°C. Zur Stabilisierung des Lösungsmittels NMMO/Wasser wurden bekannte Stabilisatoren zugesetzt. Die Stabilisierung der Celluloselösung erfolgt wie bekannt mit Gallussäurepropylester. Zur sicherheitsgerichteten Lösungsherstellung wird der Schwermetallionengehalt kontrolliert und einen Wert von 10 ppm als Summenparameter (aus Metallionen und Buntmetallionen) nicht überschritten.

Die Dichte der hergestellten Lösung beträgt bei Raumtemperatur 1.200 kg/m³. Die über die Zellstoff Mischungskomponenten eingestellte Nullscherviskosität der Spinnmasse kann, gemessen bei 75°C, bis zu 15.000 Pas betragen. Je nach der im Spinnprozess gewählten Verarbeitungstemperatur kann sich die Nullscherviskosität im Bereich von 500 bis 15.000 Pas bewegen. Bedingt durch das strukturviskose Verhalten der Spinnlösung fällt die Viskosität bei Spinnscherraten je nach gewählter Verarbeitungstemperatur auf einen Bereich von unter 100 Pas ab und ist ebenfalls stark abhängig von der Cellulosekonzentration in der Spinnlösung.

## Patentansprüche

1. Rohrleitung (1) zum Transport eines viskosen Fluids mit einem Überdruckventil (7) mit einem Abdichtelement, welches das Innere der Rohrleitung von einer Abflussleitung (23) trennt und eingerichtet ist, bei einem vorgegebenen Überdruck die Abflussleitung freizugeben, wobei das Abdichtelement (19) mit einer Fläche in der mit dem Fluid durchströmbaren Rohrleitung angeordnet ist, wobei die Fläche im Betrieb vom viskosen Fluid in der Rohrleitung umspült wird, und die dem Innenraum der Rohrleitung zugewandte Fläche des Abdichtelements mit der Innenseite der Rohrwand bündig vorliegt und die dem Innenraum der Rohrleitung zugewandte Fläche des Abdichtelements konform zur Kontur der Innenseite der Rohrwand vorliegt, und wobei das Abdichtelement durch ein Gestänge (14) in Schließposition fixiert wird, welches Gestänge durch den vorgegebenen Überdruck verschiebbar ist, sodass das damit verbundene Abdichtelement die Abflussleitung freigibt.

2. Rohrleitung nach Anspruch 1, **dadurch gekennzeichnet, dass** das Gestänge ein Knickstab ist, welcher bei dem Überdruck eine Biegung oder Knickung erfährt.

3. Rohrleitung nach Anspruch 1 oder 2, **dadurch gekennzeichnet, dass** das Gestänge durch ein Scherelement (13) fixiert wird, wobei das Scherelement das Gestänge bei dem Überdruck, welcher den Scherwiderstand überwindet, zur Verschiebung freigibt.

4. Rohrleitung nach einem der Ansprüche 1 bis 3, **dadurch gekennzeichnet, dass** das Gestänge durch eine Feder (17) fixiert wird.

5. Rohrleitung nach einem der Ansprüche 1 bis 4, **dadurch gekennzeichnet, dass** die Rohrleitung eine thermische Isolierung (3) und/oder Heiz- oder Kühlelemente (4) zur Temperierung aufweist.

6. Rohrleitung nach Anspruch 5, **dadurch gekennzeichnet, dass** zumindest ein Wärmeträgerkanal im Bereich des Überdruckventils vorgesehen ist.

7. Rohrleitung nach einem der Ansprüche 1 bis 6, **dadurch gekennzeichnet, dass** die Rohrleitung eine Abflussleitung aufweist und das Überdruckventil in eine Halterung (6, 22) in der Innenwand der Abflussleitung eingeklemmt ist.

8. Rohrleitung nach Anspruch 7, **dadurch gekennzeichnet, dass** die Rohrleitung eine Abflussleitung aufweist und das Überdruckventil in die Halterung (6, 22) in der Innenwand der Abflussleitung angeflanscht ist.

9. Rohrleitung nach einem der Ansprüche 1 bis 8, **dadurch gekennzeichnet, dass** die Rohrleitung ein Wärmetauscher (5) ist.

10. Rohrleitung nach einem der Ansprüche 1 bis 9, **dadurch gekennzeichnet, dass** das Gestänge an einem Ende am Abdichtelement und/oder am anderen Ende an einer Halterung des Überdruckventils gelenkig befestigt ist.

11. Anordnung aufweisend einen Sensor und eine Rohrleitung nach einem der Ansprüche 1 bis 10, **dadurch gekennzeichnet, dass** die Rohrleitung mit dem Sensor verbunden ist und das Gestänge oder das Abdichtelement mit dem Sensor in funktioneller Verbindung steht, welcher eine Auslenkung oder eine Verschiebung des Gestänges oder Abdichtelements detektiert, wobei der Sensor vorzugsweise ein Signal liefert, welches zwischen geöffneten und geschlossenem Zustand des Ventils unterscheidet, oder ein Signal welches Übergänge zwischen diesen Zuständen liefert.

12. Verwendung einer Rohrleitung nach einem der Ansprüche 1 bis 10 bzw. einer Anordnung nach Anspruch 11 mit einem vorgegebenen Überdruck p, wobei ein Entlastungsdurchmesser des Abdichtelements D und eine Querschnittsbreite des Gestänges b, gemäß der Formel D/b = M x(p/E)-0,652, mit M zwischen 0,003 und 0,0182, bezogen auf das Elastizitätsmodul E des Gestänges und dem vorgegebenen Überdruck p sind.

13. Verfahren zum Transport eines viskosen Fluids, welches bevorzugt thermisch instabil ist, durch eine Rohrleitung nach einem der Ansprüche 1 bis 10 bzw. eine Anordnung nach Anspruch 11.

14. Verfahren nach Anspruch 13, **dadurch gekennzeichnet, dass** das viskose Fluid eine Cellulose-Lösung ist, vorzugsweise wobei das viskose Fluid eine Lösung von Zellulose in einem wässrigen, tertiären Aminoxid ist.

## Claims

1. Pipeline (1) for transporting a viscous fluid, the pipeline comprising an overpressure valve (7) having a sealing element which separates the interior of the pipeline from an outflow line (23) and is designed to release the outflow line at a predetermined overpressure, wherein a surface of the sealing element (19) is arranged in the pipeline, through which pipeline the fluid can flow, wherein the viscous fluid flows around the surface in the pipeline during operation, and the surface of the sealing element facing the interior of the pipeline is flush with the inside of the pipe wall and the surface of the sealing element facing the interior of the pipeline conforms to the contour of the inside of the pipe wall, and wherein the sealing element is fixed in the closed position by a linkage (14), which linkage can be displaced by the predetermined overpressure, such that the sealing element connected thereto releases the outflow line.

2. Pipeline according to claim 1, **characterised in that** the linkage is a long column which bends or buckles under the overpressure.

3. Pipeline according to either claim 1 or claim 2, **characterised in that** the linkage is fixed by a shear element (13), the shear element releasing the linkage for displacement at the overpressure, which overcomes the shear resistance.

4. Pipeline according to any of claims 1 to 3, **characterised in that** the linkage is fixed by a spring (17).

5. Pipeline according to any of claims 1 to 4, **characterised in that** the pipeline has thermal insulation (3) and/or heating or cooling elements (4) for temperature control.

6. Pipeline according to claim 5, **characterised in that** at least one heat transfer channel is provided in the region of the overpressure valve.

7. Pipeline according to any of claims 1 to 6, **characterised in that** the pipeline has an outflow line and the overpressure valve is clamped in a holder (6, 22) in the inner wall of the drain line.

8. Pipeline according to claim 7, **characterised in that** the pipeline has an outflow line and the overpressure valve is flange-mounted in the holder (6, 22) in the inner wall of the drain line.

9. Pipeline according to any of claims 1 to 8, **characterised in that** the pipeline is a heat exchanger (5).

10. Pipeline according to any of claims 1 to 9, **characterised in that** the linkage is hingedly fastened at one end to the sealing element and/or at the other end to a holder of the overpressure valve.

11. Arrangement comprising a sensor and a pipeline according to any of claims 1 to 10, **characterised in that** the pipeline is connected to the sensor and the linkage or the sealing element is in functional connection with the sensor, which detects a deflection or displacement of the linkage or sealing element, the sensor preferably delivering a signal which distinguishes between the open and closed state of the valve, or a signal which provides transitions between these states.

12. Use of a pipeline according to any of claims 1 to 10 or of an arrangement according to claim 11 at a predetermined overpressure p, wherein a relief diameter of the sealing element D and a cross-sectional width of the linkage b, according to the formula D/b = M x(p/E)-0.652, where M is between 0.003 and 0.0182, based on the modulus of elasticity E of the linkage and the specified overpressure p.

13. Method for transporting a viscous fluid, which is preferably thermally unstable, through a pipeline according to any of claims 1 to 10 or through an arrangement according to claim 11.

14. Method according to claim 13, **characterised in that** the viscous fluid is a cellulose solution, preferably with the viscous fluid being a solution of cellulose in an aqueous, tertiary amine oxide.

## Revendications

1. Canalisation (1) pour le transport d'un fluide visqueux avec une soupape de surpression (7) avec un élément d'étanchéité qui isole l'intérieur de la canalisation par rapport à une conduite d'évacuation (23) et qui est conçu pour libérer la conduite d'évacuation lors d'une surpression prédéterminée, dans lequel l'élément d'étanchéité (19) est disposé avec une surface dans la canalisation pouvant être traversée par le fluide, dans laquelle la surface est rincée, lors du fonctionnement, par le fluide visqueux dans la canalisation et la surface de l'élément d'étanchéité orientée vers l'intérieur de la canalisation est en affleurement avec le côté interne de la paroi tubulaire et la surface de l'élément d'étanchéité orientée vers l'intérieur de la canalisation est conforme au contour du côté interne de la paroi tubulaire et dans laquelle l'élément d'étanchéité est fixé en position de fermeture par une tringlerie (14), cette tringlerie pouvant être coulissée par la surpression prédéterminée de façon à ce que l'élément d'étanchéité qui y est relié libère la conduite d'évacuation.

2. Canalisation selon la revendication 1, **caractérisée en ce que** la tringlerie est une tige de flambage qui subit, lors de la surpression, une flexion ou un flambage.

3. Canalisation selon la revendication 1 ou 2, **caractérisée en ce que** la tringlerie est fixée par un élément de cisaillement (13), dans laquelle l'élément de cisaillement libère la tringlerie pour le coulissement lors de la surpression, qui surmonte la résistance au cisaillement.

4. Canalisation selon l'une des revendications 1 à 3, **caractérisée en ce que** la tringlerie est fixée par un ressort (17).

5. Canalisation selon l'une des revendications 1 à 4, **caractérisée en ce que** la canalisation comprend une isolation thermique (3) et/ou des éléments de chauffage ou de refroidissement (4) pour la régulation de température.

6. Canalisation selon la revendication 5, **caractérisée en ce qu'**au moins un canal de fluide caloporteur est prévu au niveau de la soupape de surpression.

7. Canalisation selon l'une des revendications 1 à 6, **caractérisée en ce que** la canalisation comprend une conduite d'évacuation et la soupape de surpression est coincée dans un support (6, 22) dans la paroi interne de la conduite d'évacuation.

8. Canalisation selon la revendication 7, **caractérisée en ce que** la canalisation comprend une conduite d'évacuation et la soupape de surpression est bridée dans le support (6, 22) dans la paroi interne de la conduite d'évacuation.

9. Canalisation selon l'une des revendications 1 à 8, **caractérisée en ce que** la canalisation est un échangeur thermique (5).

10. Canalisation selon l'une des revendications 1 à 9, **caractérisée en ce que** la tringlerie est fixée de manière articulée à une extrémité à l'élément d'étanchéité et/ou à l'autre extrémité à un support de la soupape de surpression.

11. Installation comprenant un capteur et une canalisation selon l'une des revendications 1 à 10, **caractérisée en ce que** la canalisation est reliée avec le capteur et la tringlerie ou l'élément d'étanchéité est en liaison fonctionnelle avec le capteur, qui détecte une déviation ou un coulissement de la tringlerie ou de l'élément d'étanchéité, dans laquelle le capteur délivre de préférence un signal qui permet de distinguer un état ouvert d'un état fermé de la soupape ou un signal qui indique des transitions entre ces états.

12. Utilisation d'une canalisation selon l'une des revendications 1 à 10 ou d'une installation selon la revendication 11 avec une surpression prédéterminée p, dans laquelle un diamètre de décharge de l'élément d'étanchéité D et une largeur de section transversale de la tringlerie b sont, selon la formule D/d = M x (p/E) - 0,652, avec M entre 0,003 et 0,0182, par rapport au module d'élasticité E de la tringlerie et à la surpression prédéterminée p.

13. Procédé pour le transport d'un fluide visqueux qui est de préférence instable thermiquement à travers une canalisation selon l'une des revendications 1 à 10 ou une installation selon la revendication 11.

14. Procédé selon la revendication 13, **caractérisé en ce que** le fluide visqueux est une solution de cellulose, de préférence dans lequel le fluide visqueux est une solution de cellulose dans un oxyde d'amine tertiaire aqueux.
